# EUROPÄISCHE PATENTSCHRIFT

(11) **EP 1 588 917 B1**
(45) Veröffentlichungstag und Bekanntmachung des Hinweises auf die Patenterteilung: **08.04.2015**
(21) Anmeldenummer: 05008440.9
(22) Anmeldetag: 19.04.2005
(51) Int. Cl.: B60T 17/08, B61G 5/10, F16L 3/00

(54) **Befestigungsklemme für Bremszylinder**
Fastening clamp for brake cylinder
Collier de serrage pour cylindre de frein

(30) Priorität: 21.04.2004 DE 102004019365; 16.09.2004 DE 102004044939
(43) Veröffentlichungstag der Anmeldung: 26.10.2005
(73) Patentinhaber: KNORR-BREMSE Systeme für Nutzfahrzeuge GmbH, 80809 München (DE)
(72) Erfinder: Thalhofer, Christian, 89231 Neu-Ulm (DE); Distelrath, Peter, 89079 Ulm (DE); Schuster, Ulrich, 89079 Ulm (DE)
(74) Vertreter: Mattusch, Gundula

(56) Entgegenhaltungen:
- EP-A- 0 674 118
- EP-A- 1 306 280
- DE-A1- 10 109 515

## Beschreibung

Die vorliegende Erfindung betrifft einen Bremszylinder mit einer Befestigungsklemme, insbesondere für Nutz- oder Schienenfahrzeuge.

Es ist bekannt, dass im Bereich von Bremszylindern lose herumhängende Kabel/Leitungen schon aus Sicherheitsgründen nicht akzeptabel sind und daher in regelmäßigen Abständen eine Fixierung der Kabel/Leitungen erforderlich ist. Dabei ist die Zugänglichkeit in dem Bereich von Bremszylinder eher schlecht und es müssen dauerhafte Lösungen zur Fixierung der Kabel gefunden werden. Bei einigen Bremszylindern können die Kabel an Spannbändern befestigt werden, sodass die Kabel direkt an die Gehäusewand des Bremszylinders gedrückt werden. Dort wo insbesondere keine Spannbänder zur Verfügung stehen, fehlt es an einer entsprechenden Möglichkeit zur Fixierung der Kabel.

Die DE 1769241 offenbart eine Federklammer zum Befestigen von Leitungskabeln an Karosserieteilen offenbart. Die Federklammer ist aus einer im wesentlichen rechteckigen Platine geformt und bildet einen Haken sowie eine Aufnahme für die Leitungskabel aus.

Es ist daher Aufgabe der vorliegenden Erfindung einen Bremszylinder mit einer Befestigungsklemme zu schaffen, der einfach zu montieren ist und mit der lose herumhängenden Kabel am Bremszylinder fixiert werden können.

Diese Aufgabe wird mit einem Bremszylinder mit einer Befestigungsklemme mit den Merkmalen des Anspruches 1 gelöst.

Erfindungsgemäß ist der Bremszylinder mit einer Befestigungsklemme versehen, die an einer ringförmigen Umbördelung eines Gehäuseteils fixiert ist, wobei mindestens ein hakenförmiger Abschnitt in eine Vertiefung oder einen Spalt an der Umbördelung eingreift und mittels der Befestigungsklemme ein oder mehrere Kabel an dem Befestigungszylinder fixierbar sind. Dadurch kann die Befestigungsklemme einfach montiert werden, indem mittels des hakenförmigen Abschnittes eine Fixierung an der Umbördelung erfolgt und somit auch die Kabel entsprechend an der Befestigungsklemme bzw. der Umbördelung gehalten sind. Damit wird vermieden, dass die Kabel lose herumhängen und zudem sind keine weiteren Montageteile für die Fixierung der Befestigungsklemme erforderlich.

Vorzugsweise weist die Befestigungsklemme einen verjüngten Halsabschnitt auf, der klemmend zwischen einer Gehäusewand des Bremszylinders und einer umgebördelten Kante fixierbar ist. Die Befestigungsklemme kann quasi in einen Spalt zwischen einer umgebördelten Kante und der Gehäusewand eingeschwenkt werden, wobei ein verdickter Kopfabschnitt dann innerhalb der Umbördelung gehalten ist. Dabei ist benachbart zu dem verjüngten Halsabschnitt ein federnder Vorsprung ausgebildet, der für eine klemmende Festlegung des verjüngten Halsabschnittes sorgt. Dabei kann zwischen dem federnden Vorsprung und dem verjüngten Halsabschnitt ein keilförmiger Spalt ausgebildet sein, sodass der Vorsprung elastisch gegen den Halsabschnitt verschwenkbar ist.

Für die Fixierung von Kabeln sind an der Befestigungsklemme ein oder mehrere Aufnahmen ausgebildet, die je nach Bedarf einen entsprechenden Querschnitt aufweisen können.

Um die Befestigungsklemme in einer bestimmten Position zu fixieren, können Zapfen zur Verrastung an Bohrungen im Gehäuse des Bremszylinders ausgebildet sein, die dann in die entsprechenden Bohrungen eingreifen können. An einem Gehäuse eines Bremszylinders sind mehrere Atmungsbohrungen um den Umfang verteilt, die zur Verrastung der Zapfen eingesetzt werden können.

Für eine kostengünstige Herstellung kann die Befestigungsklemme aus Kunststoff hergestellt sein, wobei auch metallische Materialien einsetzbar sind.

Gemäß einer weiteren Ausführungsform der Erfindung umgreift die Befestigungsklemme die Umbördelung und umfasst einen ersten Schenkel, an dem ein hakenförmiger Abschnitt angeformt ist. An einem gegenüberliegenden zweiten Schenkel der Befestigungsklemme kann dann ein Griffabschnitt zum Lösen der Befestigungsklemme ausgebildet sein, sodass die Befestigungsklemme einfach zu montieren und demontieren ist. Die Kabel lassen sich dann entweder innerhalb der U-förmigen Befestigungsklemme oder außerhalb der Befestigungsklemme mittels eines zusätzlichen Kabelbinders fixieren.

Die Erfindung wird nachfolgend anhand mehrerer Ausführungsbeispiele mit Bezug auf die beigefügten Zeichnungen näher erläutert. Es zeigen:
- Figur 1: eine Seitenansicht eines Bremszylinders mit einer Umbördelung zur Fixierung einer Befestigungsklemme;
- Figur 2: ein erstes Ausführungsbeispiel einer erfindungsgemäßen Befestigungsklemme;
- Figur 3: Ein gegenüber Figur 2 modifiziertes Ausführungsbeispiel einer Befestigungsklemme und
- Figur 4: eine weitere Ausführungsform einer Befestigungsklemme, welche nicht Teil der Erfindung ist.

Ein Bremszylinder 1 umfasst ein unteres tassenförmiges Gehäuseteil 2 und ein oberes tassenförmiges Gehäuseteil 3, die im Querschnitt zylindrisch ausgebildet sind und zwischen denen eine elastische Membran 4 festgelegt ist. Die Membran 4 weist einen verdickten Randbereich 5 auf, der von einer Umbördelung 6 umgeben ist. Die Umbördelung 6 ist integral mit dem Gehäuse 2 ausgebildet und weist eine zu dem gegenüberliegenden Gehäuse 3 gewandte Vertiefung 7 auf, von der sich die Umbördelung 6 aufweitet und einen nach außen hervorstehenden Flansch 9 des Gehäuses 3 umgreift. Hierfür ist eine Kante 8 vorgesehen, die zu dem Gehäuse 3 gerichtet ist, wobei zwischen der Kante 8 und einer Wand 12 des Gehäuses 3 ein Spalt 10 ausgebildet ist. Ferner ist ein Innenraum zwischen der Kante 8 und dem Flansch 9 vorgesehen.

In dem Gehäuse 3 sind mehrere Atmungsbohrungen 11 über den Umfang verteilt.

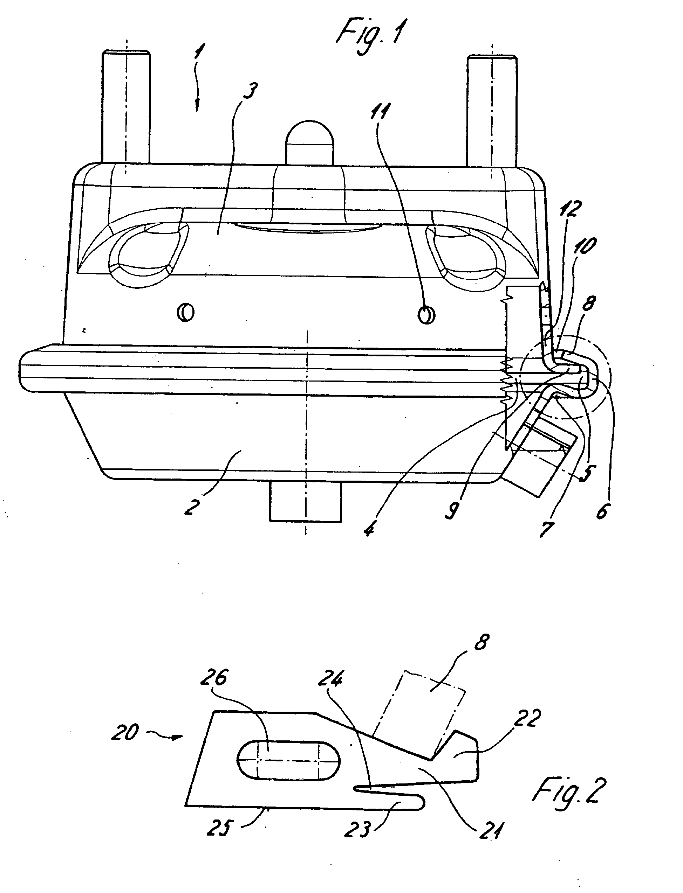

Zur Befestigung von Kabeln an dem Bremszylinder kann eine Befestigungsklemme 20 vorgesehen sein, wie sie in Figur 2 dargestellt ist. Die aus Kunststoff bestehende Befestigungsklemme 20 umfasst einen verjüngten Halsabschnitt 21, an den sich ein verdickter Kopfabschnitt 22 anschließt. Der verjüngte Halsabschnitt liegt zwischen der Kante 8 und der Wand 12 des Gehäuses 3 an, wobei der Kopfabschnitt 22 für eine Fixierung der Befesfigulgsklemme 20 sorgt. Auf der zur Kante 8 gegenüberliegenden Seite ist ein hervorstehender federnder Vorsprung 23 ausgebildet, wobei zwischen Vorsprung 23 und verjüngtem Halsabschnitt 21 ein keilförmiger Spalt 24 ausgebildet ist, sodass die gegenüberliegende Wand des verjüngten Halsabschnittes 21 formschlüssig gegen die Stirnseite der Kante 8 gedrückt werden kann. Eine flache Oberfläche 25 liegt dann an der Wand 12 des Gehäuses 3 an. Ferner sind an der Befestigungsklelle 20 Aufnahmen 26 für Kabel vorgesehen, die entweder als Durchführung 26 oder als Schnellverschluss ausgebildet sein können.

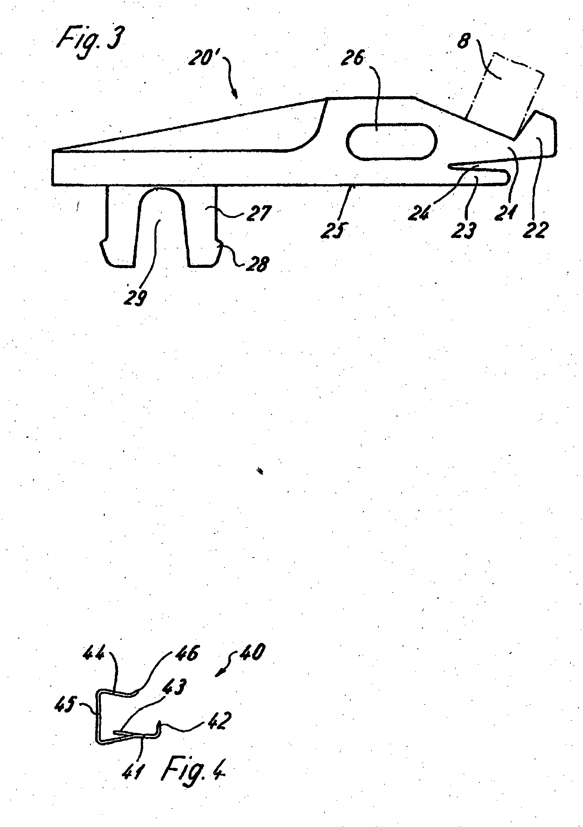

In Figur 3 ist eine Abwandlung einer Befestigungsklemme 20' gezeigt, deren Befestigungsmechanismus mit einem verjüngten Halsabschnitt 21 und einem federnden Vorsprung 23 wie bei dem Ausführungsbeispiel der Figur 2 ausgebildet ist. Ergänzend weist die Befestigungsklemme 20' einen Rastmechanismus auf, der von der Oberfläche 25 hervorstehende federnde Zapfen 27 aufweist, die an ihrem Endabschnitt eine Verdickung 28 besitzen. Die Zapfen 27 sind durch einen Spalt 29 voneinander getrennt und so bemessen, dass die Zapfen 27 in die Atmungsbohrungen 11 des Gehäuses 3 einfügbar sind, um einen zusätzlichen Halt der Befestigungsklemme 20' bereitzustellen und eine genaue Positionierung zu ermöglichen.

Eine weitere, nicht erfindungsgemäße Befestigungsklemme 40 ist in Figur 4 dargestellt. Diese Befestigungsklemme 40 ist U-förmig ausgebildet und weist einen ersten Schenkel 41 mit einem hakenförmigen Abschnitt 42 auf, wobei an dem Schenkel 41 ein nach innen hervorstehender Federabschnitt 43 ausgebildet ist. Dadurch lässt sich die Befestigungsklemme 40 besonders gut auch formschlüssig an die Umbördelung 6 anlegen, wobei durch die Vorspannung auch Vibrationen nicht für ein Lösen der Befestigungsklemme 40 sorgen. An der gegenüberliegenden Seite weist die Befestigungsklemme 40 einen Schenkel 44 mit einem nach außen gekrümmten Griffabschnitt 46 auf, der über einen Boden 44 mit dem Schenkel 41 verbunden ist.

Das Fixieren der Kabel erfolgt durch die Befestigungsklemmen, die die Kabel umgreifen und gegen die Wand des Gehäuses 2 bzw. 3 drücken. Es ist auch möglich, auf der nach außen gewandten Seite entsprechende Aufnahmen für Kabel vorzusehen, die beispielsweise mit einer Schlaufe an der Befestigungsklemme gehalten sind.

## Patentansprüche

1. Bremszylinder (1) mit einer Befestigungsklemme (20), die an einer ringförmigen Umbördelung (6) eines Gehäuseteils (2) fixiert ist, wobei mindestens ein hakenförmiger Abschnitt (21, 22) in einen Spalt (10) an der Umbördelung (6) eingreift und an der Befestigungsklemme (20) ein oder mehrere Aufnahmen zur Fixierung von Kabeln oder Leitungen an dem Bremszylinder (1) ausgebildet sind, wobei der hakenförmige Abschnitt (21, 22) der Befestigungsklemme (20, 20') einen Halsabschnitt (21) aufweist, der klemmend zwischen einer Gehäusewand (12) des Bremszylinders (1) und einer umgebördelten Kante (8) festgelegt ist und benachbart zu dem Halsabschnitt (21) ein federnder Vorsprung (23) ausgebildet ist.

2. Bremszylinder nach Anspruch 1, **dadurch gekennzeichnet, dass** an der Befestigungsklemme (20) Zapfen (27) zur Verrastung an Bohrungen (11) im Gehäuse (3) des Bremszylinders (1) ausgebildet sind.

3. Bremszylinder nach Anspruch 1 oder 2, **dadurch gekennzeichnet, dass** die Befestigungsklemme (20) aus Kunststoff oder Metall hergestellt ist.

4. Bremszylinder nach einem der vorhergehenden Ansprüche, **dadurch gekennzeichnet, dass** der hakenförmige Abschnitt der Befestigungsklemme (20) einen verjüngten Halsabschnitt (21) und einen verdickten Kopfabschnitt (22) aufweist.

## Claims

1. Brake cylinder (1) comprising a fastening clamp (20) fixedly attached to a ringshaped beading (6) of a housing part (2), wherein at least one hook-shaped portion (21, 22) is engaged in a gap (10) on said beading (6) and one or several receiving parts are formed on said fastening clamp (20) for fixing cables or lines on said brake cylinder (1), with said hook-shaped portion (21, 22) of said fastening clamp (20, 20') including a neck portion (21) that is fastened, with clamping action, between a housing wall (12) of said brake cylinder (1) and a beaded edge (8) whilst a resilient protrusion (23) is formed adjacently to said neck portion (21).

2. Brake cylinder (1) according to Claim 1, **characterised in that** pins (27) are formed on said fastening clamp (20) for latching at bores (11) in said housing (3) of said brake cylinder (1).

3. Brake cylinder (1) according to Claim 1 or 2, **characterised in that** said fastening clamp (20) is manufactured from synthetic material or metal.

4. Brake cylinder (1) according to any of the preceding Claims, **characterised in that** said hook-shaped portion of said fastening clamp (20) includes a tapered neck portion (21) and a thickened head portion (22).

## Revendications

1. Cylindre de frein (1) comprenant un collier de serrage (20) fixé à un bord rabattu en forme d'anneau (6) d'une partie de carter (2), dans lequel au moins une section en forme de crochet (21, 22) est mise en prise dans une fente (10) audit bord rabattu (6) et une ou plusieurs partie réceptrices sont formées audit collier de serrage (20) afin de fixer des câbles ou lignes audit cylindre de frein (1), à ladite section en forme de crochet (21, 22) dudit collier de serrage (20, 20') renfermant une partie de col (21), qui st fixé, de manière serrée, entre une paroi dudit carter (12) dudit cylindre de frein (1) et un bord rabattu (8), pendant qu'une saillie élastique (23) est formée à une position adjacente à ladite partie de col (21).

2. Cylindre de frein (1) selon la revendication 1, **caractérisé en ce que** des tenons (27) sont formés audit collier de serrage (20) pour une fonction accrochage verrouillant aux trous (11) dans ledit carter (3) dudit cylindre de frein (1).

3. Cylindre de frein (1) selon la revendication 1 ou 2, **caractérisé en ce que** ledit collier de serrage (20) est fait en un matériau synthétique ou en métal.

4. Cylindre de frein (1) selon une quelconque des revendications précédentes, **caractérisé en ce que** ladite section en forme de crochet dudit collier de serrage (20) renferme une partie de col rétrécie (21) et une partie de tête (22) épaissie.
